# EUROPÄISCHE PATENTSCHRIFT

(11) **EP 3 643 687 B1**
(45) Veröffentlichungstag und Bekanntmachung des Hinweises auf die Patenterteilung: **30.11.2022**
(21) Anmeldenummer: 18202836.5
(22) Anmeldetag: 26.10.2018
(51) Int. Cl.: C03B 19/14, C03B 23/043, C03B 32/00, C03B 20/00

(54) **VERFAHREN UND VORRICHTUNG ZUR HOMOGENISIERUNG VON GLAS**
METHOD AND DEVICE FOR HOMOGENISATION OF GLASS
PROCÉDÉ ET DISPOSITIF D'HOMOGÉNÉISATION DE VERRE

(43) Veröffentlichungstag der Anmeldung: 29.04.2020
(73) Patentinhaber: Heraeus Quarzglas GmbH & Co. KG, 63450 Hanau (DE)
(72) Erfinder: THOMAS, Stephan, 63538 Großkrotzenburg (DE); VYDRA, Jan, 63456 Hanau (DE); TROMMER, Martin, 06749 Bitterfeld (DE); HÜNERMANN, Michael, 63755 Alzenau (DE); LANGNER, Andreas, 63579 Freigericht (DE); LEHMANN, Walter, 04155 Leipzig (DE); HENGSTER, Stefan, 64850 Schaafheim (DE); BECKER, Klaus, 63457 Hanau (DE)
(74) Vertreter: Staudt, Armin Walter

(56) Entgegenhaltungen:
- EP-A1- 2 757 078
- EP-A2- 1 533 283
- DE-A1-102005 044 947

## Beschreibung

### Technischer Hintergrund

Die Erfindung betrifft ein Verfahren zur Homogenisierung von Glas, umfassend die Verfahrensschritte:
(a) Bereitstellen eines zylinderförmigen Rohlings aus dem Glas mit einer Zylindermantelfläche, die sich entlang einer Rohling-Längsachse über eine Rohling-Länge zwischen einem ersten stirnseitigen Ende und einem zweiten stirnseitigen Ende erstreckt,
(b) Ausbilden einer Scherzone in dem Rohling, indem ein Längenabschnitt des Rohlings erweicht und einer thermisch-mechanischen Durchmischungsbehandlung unterzogen wird, und
(c) Bewegen der Scherzone entlang der Rohling-Längsachse.

Außerdem betrifft die Erfindung eine Vorrichtung zur Homogenisierung eines zylinderförmigen Rohlings aus Glas, der eine Zylindermantelfläche aufweist, die sich entlang einer Rohling-Längsachse über eine Rohling-Länge zwischen einem ersten stirnseitigen Ende und einem zweiten stirnseitigen Ende erstreckt, umfassend:
(a) eine Halte- und Rotationseinrichtung mit einem ersten Halteelement zur Lagerung und Rotation des ersten stirnseitigen Rohling-Endes mit einer ersten Rotationsgeschwindigkeit, und einem zweiten Halteelement zur Lagerung und Rotation des zweiten stirnseitigen Rohling-Endes mit einer zweiten Rotationsgeschwindigkeit, wobei das erste und zweite Haltelement einen Arbeitsabstand und eine Arbeitsachse der Halte- und Rotationseinrichtung definieren,
(b) eine Heizeinrichtung zum Erweichen eines Längenabschnitts des Rohlings, und
(c) einer Verschiebeeinrichtung zur Erzeugung einer Relativbewegung zwischen Heizeinrichtung und Rohling entlang der Arbeitsachse,

In Hochpräzisionssysteme eingebaute optische Bauteile aus Glas unterliegen hohen Anforderungen hinsichtlich ihrer Transparenz und Homogenität. Häufig zeigt Glas allerdings heterogene Strukturen, wie Schichten und sogenannte "Schlieren", die auf Glasbereiche mit unterschiedlicher Zusammensetzung oder Unterschieden im Brechungsindex zurückzuführen sind.

Dies ist besonders problematisch bei hochkieselsäurehaltigem Glas mit einem hohen Anteil an SiO₂ von beispielsweise mehr als80 Gew.-%, und insbesondere bei Quarzglas mit einem SiO₂-Anteil von 87 Gew.-% oder mehr. Dabei kann die Viskosität auch bei Temperaturen nahe der Sublimation immer noch so hoch sein, dass es nicht in einem Schmelztiegel durch Rühren oder Läutern homogenisiert werden kann.

Zur Beseitigung von Schlieren und Schichten in Quarzglas sind tiegelfreie Schmelzverfahren bekannt, bei denen ein zylinderförmiger Ausgangskörper in Spindelstöcke einer Glasdrehbank eingespannt und zonenweise erweicht wird, wobei gleichzeitig die Spindelstöcke mit unterschiedlichen Geschwindigkeiten oder gegenläufig um eine Rotationsachse rotieren. Durch die unterschiedliche Rotation des Ausgangskörpers beiderseits der Erweichungszone kommt es dort zu Torsion (Verdrillen) und damit zu mechanischer Durchmischung im Glasvolumen. Der Bereich der Durchmischung wird hier auch als "Scherzone" bezeichnet. Die Scherzone wird entlang des Ausgangskörpers bewegt und dieser über seine Länge umgeformt und durchmischt. Heterogene Strukturen (Schlieren und Schichten) werden so verringert oder beseitigt. Ergebnis dieser thermisch-mechanischen Durchmischungsbehandlung ist ein Rohling aus mindestens teilweise homogenisiertem Glas. Diese Art der thermisch-mechanischen Durchmischungsbehandlung durch werkzeugfreies Umformen wird im Folgenden auch als "Homogenisierungsprozess", "Zonenschmelzverfahren" oder "Drillen", und der nach dem Drillen vorliegende mindestens teilweise homogenisierte zylinderförmige Rohling wird als "Drillstab" bezeichnet.

### Stand der Technik

Ein derartiges Zonenschmelzverfahren ist aus der US 3,485,613 A bekannt. Der in eine Glasdrehbank eingespannte massive oder mit einer Pulvermischung gefüllte Glaszylinder wird lokal erhitzt und zonenweise tordiert. Als Heizquelle werden ein- oder mehrflammige Brenner oder elektrische Heizquellen eingesetzt. Die Abmessung der Scherzone in Richtung der Rotationsachse (=Breite der Scherzone) hängt von der Viskosität ab. Bei Viskositäten von weniger als etwa 10¹³ Poise (dPa·s) wird sie auf einen Wert im Bereich zwischen dem 0,1 bis 3-fachen des Stabdurchmessers eingestellt, und bei Viskositäten von weniger als etwa 10⁵ Poise (dPa·s) auf einen Wert im Bereich zwischen dem 0,1 bis 1-fachen des Stabdurchmessers. Sie kann durch seitlich einwirkende Kühlmittel eingeengt werden.

Durch ein einfaches Zonenschmelzverfahren ist eine Homogenisierung in Richtung der Rotationsachse nicht erreichbar. Zur Homogenisierung einer Quarzglasmasse in drei senkrecht zueinander verlaufenden Richtungen wird in der EP 673 888 B1 ein mehrstufiges Zonenschmelzverfahren vorgeschlagen, bei dem durch Zusammenstauchen eines Drillstabes ein kugelförmiger Quarzglaskörper als Zwischenprodukt erzeugt wird, an dem beiderseits Haltestäbe angesetzt werden, die quer zu einer vorherigen Rotationsachse verlaufen und mittels denen der kugelförmiger Quarzglaskörper langgezogen und erneut einem Zonenschmelzverfahren mit anderer Rotationsachse unterzogen wird. Beim Verdrillen rotiert der eine Haltestab beispielsweise mit 20 bis 100 Umdrehungen pro Minute, und der andere Haltestab in entgegengesetzter Richtung mit dem 1- bis 3-fachen dieser Geschwindigkeit. Als Heizquelle werden Knallgas- oder Propangasbrenner oder elektrische Heizelemente eingesetzt.

Die EP 2 757 078 A1 beschreibt eine zonenweise thermisch-mechanische Durchmischungsbehandlung eines Zylinders aus Titan-dotiertem Glas mit den eingangs genannten Verfahrensschritten (a) bis (c).

Die DE 10 2005 044 947 A1 beschreibt ein Verfahren zum Verschweißen zweier Quarzglaszylinder innerhalb eines Muffelrohres (Einhausung) aus opakem Quarzglas. Dessen Innenmantelfläche ist mit einer Innenschicht aus vorab gereinigtem Quarzsand belegt. Außerdem ist die Innenmantelfläche durch ein halbschalenförmiges Einlegeteil aus Quarzglas vor den Heizbrennern geschützt. Es wird erwähnt, dass sich bei der Herstellung des Muffelrohres auf derjenigen Oberfläche, die dem Heizelement zugewandt ist, eine dünne transparente Oberflächenschicht bilden kann, die die wärmeisolierende Wirkung der ansonsten opaken Quarzglaswandung aber nicht beeinträchtigt.

### Technische Aufgabenstellung

Insbesondere bei hoher Umformgeschwindigkeit, also der Geschwindigkeit mit der die Scherzone entlang der Rohling-Längsachse bewegt wird, wird in Drillstäben Rissbildung oder Stangenbruch beobachtet.

Der Erfindung liegt daher die Aufgabe zugrunde, ein modifiziertes Zonenschmelzverfahren für Glas, insbesondere für Glas mit einem hohen SiO₂-Anteil und besonders für Quarzglas anzugeben, bei dem das Risiko von Rissen und Brüchen verringert ist.

Außerdem liegt der Erfindung die Aufgabe zugrunde, eine Vorrichtung zur Durchführung des Verfahrens bereitzustellen.

### Zusammenfassung der Erfindung

Hinsichtlich des Verfahrens wird diese Aufgabe ausgehend von einem Verfahren der eingangs genannten Gattung erfindungsgemäß dadurch gelöst, dass ein die Scherzone mindestens teilweise umgebender Wärmestrahlungsdissipator eingesetzt wird, dessen seitliche Abmessung in Richtung der Rohling-Längsachse größer als die Scherzone und kleiner als die Rohling-Länge ist, wobei der Wärmestrahlungsdissipator gleichlaufend mit der Scherzone entlang der Rohling-Längsachse bewegt wird ist, und dass der Wärmestrahlungsdissipator mit einer der Scherzone zugewandten Glasschicht aus einem für Infrarotstrahlung aus dem NIR-Wellenlängenbereich von 780 nm und 3000 nm transparenten Quarzglas, das bei einer Probendicke von 10 mm mindestens 50 % der auftreffenden NIR-Strahlungsleistung transmittiert, gebildet wird.

Das erfindungsgemäße Verfahren dient zur Herstellung von Glas, insbesondere von hochkieselsäurehaltigem Glas und ganz besonders von reinem oder dotiertem Quarzglas, das mindestens teilweise homogenisiert ist. Der zylinderförmige Rohling wird dabei einer thermisch mechanischen Durchmischungsbehandlung, dem Zonenschmelzverfahren, unterzogen. Dieses umfasst einen Durchlauf oder mehrere Durchläufe (mehrere Drillhübe). Hierzu wird der Rohling - in der Regel beidseitig mittels angeschmolzener Haltestäbe verlängert - in eine Rotationseinrichtung - wie etwa in eine Glasdrehbank - eingespannt, die mit mindestens einer Heizquelle zum lokalen Erweichen des Rohlings ausgestattet ist. Durch unterschiedliche Rotationsgeschwindigkeiten und/oder Rotationsrichtungen (Drehsinn) der beiderseitigen Rohling-Halterungen zueinander bildet sich im erweichten Glas eine Scherzone, in der eine Tordierung und Durchmischung des Glases stattfindet. Durch kontinuierliche Verlagerung der Heizeinrichtung entlang der Rohling-Längsachse und/oder durch kontinuierliche Verlagerung des Rohlings entlang der Heizeinrichtung wird die Scherzone durch den Rohling hindurchbewegt.

Das Glas muss zur Ausbildung einer Scherzone auf hohe Temperaturen aufgeheizt werden; beispielsweise liegen die dafür erforderlichen Temperaturen bei reinem Quarzglas oberhalb von 2000 °C. Damit es zur Ausbildung einer effektiv durchmischenden Scherzone kommt, ist eine hinreichende Erwärmung des Glases über den gesamten Rohling-Durchmesser erforderlich.

Andererseits ist Glas und insbesondere Quarzglas ein guter Wärmeisolator, was das Einbringen der Wärme in das Glasvolumen und die Erzeugung eines homogenen Temperaturverlaufs über den Durchmesser des Rohlings erschwert. Kritisch ist das Erreichen einer hinreichenden Temperatur in der Mitte, also im Bereich der Rohling-Längsachse. Das ausreichende Durchwärmen in der Rohlingmitte, erfordert eine deutlich höhere Temperatur im peripheren Rohlingbereich, also einen großen radialen Temperaturunterschied ΔTr zwischen Rohlingmitte und Zylindermantelfläche.

Eine denkbare Erklärung dafür ist, dass die Wärmeübertragung im Wesentlichen über die Zylindermantelfläche des Rohlings erfolgt. Die Hitze an der Zylindermantelfläche verteilt sich in das Innere des Rohlings. Das erwärmte Quarzglas strahlt bei Temperaturen um 2000°C jedoch eine große Menge dieser Wärme ab, wobei die Abstrahlung gemäß des Stefan Boltzmann Gesetzes proportional der 4. Potenz der lokalen Temperatur aus dem gesamten Glasvolumen erfolgt. Da also die Beheizung überwiegend durch Wärmeleitung über die Oberfläche erfolgt, der Wärmeverlust aber aus dem gesamten Volumen kommt, bildet sich ein radialer Temperaturgradient ΔTr aus.

Beim Erhitzen des Rohlings ohne Wärmestrahlungsdissipator erfolgt die Abstrahlung in die kühlere Umgebung, welche als Strahlungssenke dient, so dass der besagte radiale Temperaturgradient besonders hoch ist. Demzufolge muss ein vergleichsweise hoher Wärmeeintrag von außen erfolgen, um die Viskosität in der Rohlingmitte ausreichend abzusenken.

Demgegenüber ergeben sich bei Einsatz eines Wärmestrahlungsdissipators Verbesserungen in mehrfacher Hinsicht.
- Der Wärmestrahlungsdissipator vermindert die Wärmestrahlungssenke um die Scherzone. Der radiale Temperaturgradient ΔTr wird dadurch reduziert. Eine gleichmäßigere radiale Temperaturverteilung bewirkt eine gleichmäßigere Scherwirkung in radialer Richtung und erleichtert die Ausbildung der Scherzone.
- Der Wärmestrahlungsdissipator heizt sich im Prozess auf, denn er wird sowohl durch etwaige heiße Brennergase als auch durch die abgestrahlte Wärme (Zylindermantelfläche und Volumen) geheizt. Dies führt im Prozess zur Ausbildung des Wärmestrahlungsdissipators als Strahlungsquelle für Infrarotstrahlung. Diese Infrarotstrahlung gelangt wegen der Infrarot-Transparenz des Rohling-Glases auch nach innen und gleicht die Strahlungsverluste von dort aus mindestens teilweise aus.
- Dazu trägt bei Gegenwart von heißen Plasma- oder Heizgasen auch bei, dass diese heißen Gase beidseitig der Scherzone im Zwischenraum zwischen dem Rohling und der Wärmestrahlungsdissipator nach rechts und links entlang des Rohlings abfließen können. Auch dadurch werden die Bereiche neben der Scherzone vor- beziehungsweise nachgeheizt. Das Vorheizen kann zur Vergleichmäßigung der radialen Temperaturverteilung im Rohling beitragen, und das Nachheizen zur Verminderung thermischer Spannungen durch zu schnelles Abkühlen.

Der beim erfindungsgemäßen Drillverfahren eingesetzte Wärmestrahlungsdissipator absorbiert mindestens einen Teil der Wärmeenergie aus dem Bereich der Scherzone durch Wärmestrahlung, Wärmeleitung oder Wärmekonvektion, erwärmt sich dadurch selbst und gibt diese Energie mindestens teilweise als längerwelligere Infrarotstrahlung wieder an den Rohling und insbesondere an die Scherzone ab. Dadurch, dass seine seitliche Abmessung größer ist als die der Scherzone, wird Wärmeenergie aber auch auf das der Scherzone benachbarte Glas übertragen. Durch die Erwärmung der an die Scherzone angrenzenden, also der Scherzone vorlaufenden und nachlaufenden Glas-Volumenbereiche wird der radiale Temperaturgradient verringert. Denn durch diese Vorab-Erwärmung benötigt das als nächstes in die Scherzone gelangende Glasvolumen einen geringeren zusätzlichen Wärmeeintrag seitens der Heizquelle um eine hinreichende Temperatur zu erreichen.

Das hat zur Folge, dass die maximale Temperatur im peripheren Bereich des Rohlings und damit auch die Temperaturdifferenz ΔTr zwischen Rohlingmitte und -peripherie kleiner ist als bei einem Umformprozess ohne Wärmestrahlungsdissipator.

Es wird ein Wärmestrahlungsdissipator eingesetzt, der eine Wandung mit einer der Scherzone zugewandten, reflektierenden Innenoberfläche hat, die von einer Glasschicht aus einem für Infrarotstrahlung aus dem NIR-Wellenlängenbereich transparenten Quarzglas gebildet wird.

Die Glasschicht hat vorzugsweise keine offenen Poren, in denen sich Fremdmaterialien festsetzen könnten, so dass beim Drillprozess ein Eintrag von Verunreinigung in den Rohling vermieden wird. Die Ausbildung der Glasschicht aus Quarzglas gewährleistet, dass die Reflektivität der Innenoberfläche und damit deren Einfluss auf das Temperaturprofil im Bereich der Scherzone sich im Lauf der Zeit durch abgedampftes SiO₂ nicht verändert, wenn sich dieses auf der Innenoberfläche als SiO₂-Schicht niederschlägt (im Folgenden auch als "SiO₂-Deposit" bezeichnet) und das infolge der hohen Temperaturen beim Drillprozess zu Quarzglas verglast. Für beide Wirkungen (Reinheit und Reflektivität) genügt eine Schichtdicke von beispielsweise 0,1 mm oder mehr.

Die Glasschicht ist für Infrarotstrahlung aus dem NIR-Wellenlängenbereich transparent, jedoch wird ein Teil der auf die Innenoberfläche auftreffenden Strahlung wegen der Brechungsindex-Differenz von Gas-Atmosphäre und Glas reflektiert. Der reflektierte Anteil der auftreffenden Gesamtstrahlungsintenstät liegt in der Regel um etwa 4%. Der nicht reflektierte Teil der Infrarotstrahlung breitet sich in der Glasschicht weiter aus und wird darin zu einem kleinen Teil gestreut oder absorbiert.

Vorzugsweise trifft der dabei transmittierte Strahlungsanteil auf eine Schicht aus opakem Quarzglas, die Infrarotstrahlung diffus streut und absorbiert.

Insbesondere im Hinblick darauf, dass eine schmale Scherzone eine intensivere Durchmischung des Glasvolumens bewirkt als eine vergleichsweise breitere Scherzone wird die Breite der Scherzone vorzugsweise kleiner als das 0,3-fache des Rohling-Durchmessers.

Beim Zonenschmelzverfahren sind die Rotationsgeschwindigkeiten ω1 und ω2 beiderseits der "Scherzone" ungleich. Der Unterschiedsbetrag der beiderseitigen Rotationsgeschwindigkeiten ergibt sich aus Δω = |ω2-ω1|; bei gegensinniger Rotation hat eine der Rotationsgeschwindigkeiten negatives Vorzeichen. Innerhalb der Scherzone erfolgt ein Übergang von der einen Rotationsgeschwindigkeit ω1 auf die andere ω2. In der Mitte der Scherzone stellt sich eine Rotationsgeschwindigkeit ein, die dem Mittelwert v̅ zwischen den beiderseitigen Rotationsgeschwindigkeiten entspricht (v̅ = (ω2+ω1)/2). Als "Scherzone" wird hier dasjenige Glasvolumen definiert, in dem für die axiale Änderung der Rotationsgeschwindigkeit dω/dx gilt: /dω/dx/ > 0,5 x |dω/dx|ₘₐₓ. Als "Breite der Scherzone" wird der Längenabschnitt in Richtung der Rohling-Längsachse definiert, in dem die obige Bedingung erfüllt ist.

Die Bestimmung der Rotationsgeschwindigkeiten erfolgt durch Messung der Oberflächengeschwindigkeit durch optische Bildverarbeitung und Auswertung der Bewegung oberflächennaher Unregelmäßigkeiten, wie beispielsweise von Bläschen.

Dadurch, dass sich der Wärmestrahlungsdissipator mit der Scherzone entlang der Rohling-Längsachse mitbewegt, ist gewährleistet, dass sich die Temperaturbedingungen in der Scherzone und den daran angrenzenden Glas-Volumenbereichen während des Umformprozesses nicht ändern.

Da die Scherzone um eine Rotationsachse rotiert, der Wärmestrahlungsdissipator jedoch nicht (er ist ortsfest in Bezug auf eine Rotation um die Rohling-Längsachse), genügt es, wenn der Wärmestrahlungsdissipator einen Teilkreis um den Rohling abdeckt. In einfachen Fällen ist er beispielsweise als parallel zur Rohling-Längsachse und zur Zylindermantelfläche verlaufender Streifen oder als Halbschale ausgeführt.

Im Hinblick auf eine möglichst vollständige Erfassung, Umwandlung und Nutzung der von der Scherzone abgestrahlten Wärmestrahlung hat sich aber eine um den Zylindermantel umlaufende Ausführung des Wärmestrahlungsdissipators, vorzugsweise in Form eines Rohres bewährt. Das Rohr ist gegebenenfalls beidseitig vollständig oder teilweise offen und es hat eine geschlossene oder weitgehend geschlossene Rohrwand. Verluste an Wärmeenergie durch Strahlung oder Konvektion werden so vermieden. Die Innenbohrung des Rohres ist im einfachsten Fall zylinderförmig mit rundem, ovalem oder polygonalem Querschnitt. Sie kann koaxial zur Rohling-Längsachse verlaufen und beispielsweise konisch sein oder sie kann in axialer Richtung eine Heterogenität haben, wie etwa eine Querschnittsveränderung. In der Rohrwandung können Öffnungen vorhanden sein, durch die ein Teil der Wärme abgeführt werden kann oder durch die eine aktive Kühlung möglich ist, um den Wärmeeintrag im Hinblick auf eine möglichst schmale Scherzone einstellen zu können. Die Rohrwandung ist einstückig oder sie ist aus mehreren aneinandergefügten Rohrstücken oder aus mehreren anderen Bauelementen zusammengesetzt.

Die Heizquelle befindet sich dabei entweder innerhalb der Rohröffnung oder sie wirkt von außen auf die Scherzone ein, beispielsweise durch eine oder auch mehrere Öffnungen der Rohrwand oder durch einen Längsschlitz. Ein Längsschlitz in einer ansonsten umlaufenden Rohrwand hat auch den Vorteil, dass mechanische Spannungen infolge der hohen Temperaturen und der thermischen Ausdehnung vermieden werden, was etwaige Nachteile durch den Längsschlitz hinsichtlich der Wirkung auf die Temperatur-Homogenisierung in der und um die Scherzone kompensiert.

Bei einer besonders bevorzugten Verfahrensweise wird zwischen der Zylindermantelfläche des Wärmestrahlungsdissipators und dem Rohling ein freier Abstand im Bereich von 15 % bis 80 % des Rohling-Durchmessers eingestellt.

Der Abstand wirkt sich auf die Temperatur an der Oberfläche des Rohlings und auf die Temperaturverteilung aus. Bei einem vergleichsweise großen Abstand ist die auf der Rohling-Oberfläche auftreffende Strahlungsintensität geringer, der bestrahlte Oberflächenbereich aber wegen des breiteren Abstrahlwinkels größer. Bei einem freien Abstand von mehr als 80% des Rohling-Durchmessers ergibt sich eine vergleichsweise große bestrahlte Fläche, was einer schmalen Scherzone entgegenwirkt. Bei einem vergleichsweise kleinen freien Abstand von weniger als 15% des Rohling-Durchmessers kann sich durch eingeschlossene Gase ein Druck aufbauen, der den Zutritt einer Brenner- oder Plasmaflamme erschwert.

Die Opazität der Schicht aus opakem Quarzglas verhindert die direkte Transmission der Infrarotstrahlung zu Gunsten von Streuung und Absorption. An der Schicht aus opakem Quarzglas wird wiederum ein Teil der Infrarotstrahlung reflektiert. Die zweifache Reflexion an der Schichtenfolge aus Glasschicht und Schicht aus opakem Quarzglas bewirkt, dass der nicht reflektierte Strahlungsanteil erst innerhalb der Infrarotstrahlung absorbierenden Schicht aus opakem Quarzglas absorbiert wird und dort Wärme erzeugt, wohingegen die heiße Gas-Atmosphäre um die Scherzone nur auf die dem Rohling zugewandte Innenseite durch Wärmeleitung einwirkt. Der Wärmeeintrag in den Wärmestrahlungsdissipator durch Strahlung findet daher im Wesentlichen in der Schicht aus opakem Quarzglas und damit an einer anderen Stelle statt als der Wärmeeintrag durch Wärmeleitung. Dadurch bleibt einerseits die Innenseite heiß genug, um SiO₂-Deposits auf der Innenseite zu binden und zu verglasen, so dass sie nicht herabfallen, und andererseits wird eine Überhitzung der Innenseite vermieden.

Die Opazität der Schicht aus opakem Quarzglas wird vorzugsweise durch eine Porosität des Quarzglases im Bereich von 2 bis 8% bewirkt.

Der Wärmestrahlungsdissipator besteht vorzugsweise vollständig aus Quarzglas und besonders bevorzugt aus Quarzglas, das mittels Pyrolyse oder Hydrolyse aus siliziumhaltigen Ausgangssubstanzen synthetisch erzeugt worden ist.

Hinsichtlich der Vorrichtung wird die oben genannte technische Aufgabe ausgehend von einer Vorrichtung der eingangs genannten Gattung erfindungsgemäß dadurch gelöst, dass die Heizeinrichtung eine Heizquelle und einen Wärmestrahlungsdissipator umfasst, wobei der Wärmestrahlungsdissipator eine seitliche Abmessung in Richtung der Arbeitsachse aufweist, die kleiner ist als der Arbeitsabstand und größer als eine im Rohling ausgebildete Scherzone, wobei der Wärmestrahlungsdissipator eine der Scherzone zugewandte, reflektierende Glasschicht aufweist, die aus einem für Infrarotstrahlung aus dem NIR-Wellenlängenbereich von 780 nm und 3000 nm transparenten Quarzglas, das bei einer Probendicke von 10 mm mindestens 50 % der auftreffenden NIR-Strahlungsleistung transmittiert, gebildet wird.

Diese Vorrichtung ist besonders geeignet zur Durchführung des oben erläuterten Verfahrens gemäß der Erfindung. Der bei dieser Vorrichtung eingesetzte Wärmestrahlungsdissipator ist neben der Heizquelle ein wichtiger Bestandteil der Heizeinrichtung. Er absorbiert mindestens einen Teil der Wärmeenergie aus dem Bereich der Scherzone durch Wärmestrahlung, Wärmeleitung oder Wärmekonvektion, erwärmt sich dadurch selbst und gibt diese Energie mindestens teilweise als längerwelligere Infrarotstrahlung wieder an die Umgebung ab.

Seine seitliche Abmessung in Richtung der Arbeitsachse ist größer als die der Scherzone, so dass die von ihm emittierte Wärmeenergie auch auf das der Scherzone benachbarte Glasvolumen übertragen wird. Wie oben anhand des erfindungsgemäßen Verfahrens erläutert, kann dadurch die radiale Temperaturdifferenz ΔTr zwischen Rohlingmitte und -peripherie klein gehalten werden.

Der Wärmestrahlungsdissipator ist in der Regel ortsfest in Bezug auf eine Rotation um die Arbeitsachse. Es genügt, wenn der Wärmestrahlungsdissipator einen Teilkreis um den Rohling abdeckt. In einfachen Fällen ist er beispielsweise als parallel zur Rohling-Längsachse und zur Zylindermantelfläche verlaufender Streifen oder als Halbschale ausgeführt.

Im Hinblick auf eine möglichst vollständige Erfassung, Umwandlung und Nutzung der von der Scherzone abgestrahlten Wärmestrahlung bildet er aber vorzugsweise eine vollständige oder partielle Einhausung um die Scherzone in Form eines Rohres. Das Rohr ist gegebenenfalls beidseitig vollständig oder teilweise offen und es hat eine geschlossene oder weitgehend geschlossene Rohrwand. Verluste an Wärmeenergie durch Strahlung oder Konvektion werden so verringert. Die Innenbohrung des Rohres ist im einfachsten Fall zylinderförmig mit rundem, ovalem oder polygonalem Querschnitt. Sie kann koaxial zur Rohling-Längsachse verlaufen und beispielsweise konisch sein oder sie kann im Bereich der Scherzone eine Heterogenität haben, wie etwa eine Querschnittsveränderung. In der Rohrwandung können Öffnungen vorhanden sein, durch die ein Teil der Wärme abgeführt werden kann oder durch die eine aktive Kühlung möglich ist, um den Wärmeeintrag im Hinblick auf eine möglichst schmale Scherzone einstellen zu können. Die Rohrwandung ist einstückig oder sie ist aus mehreren aneinandergefügten Rohrstücken oder aus mehreren anderen Bauelementen zusammengesetzt. Die Heizquelle befindet sich dabei entweder innerhalb der Rohröffnung oder sie wirkt von außen auf die Scherzone ein, beispielsweise durch eine oder auch mehrere Öffnungen der Rohrwand oder durch einen Längsschlitz. Ein Längsschlitz in einer ansonsten umlaufenden Rohrwand hat auch den Vorteil, dass mechanische Spannungen infolge der hohen Temperaturen und der thermischen Ausdehnung vermieden werden, was etwaige Nachteile durch den Längsschlitz hinsichtlich der Wirkung auf die Temperatur-Homogenisierung in der und um die Scherzone kompensiert.

Der Wärmestrahlungsdissipator hat eine Abmessung in Richtung der Arbeitsachse, die kleiner ist als der von den beidseitigen Rohling-Halterungen definierte Arbeitsabstand. Seine Abmessung in dieser Richtung ist somit auch kürzer als die Länge des Rohlings, der in die Halterungen eingespannt ist. Er ist synchron mit der Heizquelle entlang der Arbeitsachse bewegbar.

Vorteilhafte Ausgestaltungen der erfindungsgemäßen Vorrichtung ergeben sich aus den Unteransprüchen. Soweit in den Unteransprüchen angegebene Ausgestaltungen der Vorrichtung den in Unteransprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen

### Definitionen und Messmethoden

Einzelne Verfahrensschritte und Begriffe der obigen Beschreibung sowie Messmethoden werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

### Quarzglas - hochkieselsäurehaltiqes Glas

Unter Quarzglas wird hier Glas mit einem SiO₂-Anteil von mindestens 87 Gew-% verstanden. Es ist undotiert (SiO₂-Gehalt = 100%) oder es enthält Dotierstoffe, wie beispielsweise Fluor, Chlor oder Oxide von Seltenerdmetallen, Aluminium oder Titan. Unter einem hochkieselsäurehaltigen Glas wird ein Glas mit einem SiO₂-Anteil von mindestens 80 Gew-% verstanden.

### Porosität - Messung des Porenvolumens

Das "Porenvolumen" eines porösen Materials bezeichnet das von Hohlräumen belegte, freie Volumen innerhalb des Materials. Das Porenvolumen wird beispielsweise mittels eines Porosimeters gemessen, wobei eine nicht benetzende Flüssigkeit (wie beispielsweise Quecksilber) unter Einwirkung eines äußeren Drucks in die Poren eines porösen Materials gegen die entgegenwirkenden Oberflächenspannungskräfte gepresst wird. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen). "Mikroporen" sind Poren mit Porengrößen von weniger als 2 nm. Deren Beitrag zur Porosität und zur spezifischen Oberfläche wird anhand der mittels der V-t-Methode mittels Stickstoffabsorption ermittelt, wobei eine Probe bei unterschiedlichen Drücken und 77 K gehalten wird. Die Methode gleicht der der BET-Methode, wobei der Druckbereich zu höheren Drücken ausgedehnt ist, so dass auch Oberflächen des nicht mikroporösen Teils des Materials erfasst werden.

### Transparenz im NIR-Wellenlängenbereich

Für den Wellenlängenbereich des "Nahem Infrarot" (abgekürzt: NIR) gibt es unterschiedliche Nomenklaturen. Im Rahmen dieser Anmeldung wird darunter in Übereinstimmung mit DIN 5031 Teil 7 (Januar 1984) der Spektralbereich zwischen 780 nm und 3000 nm definiert.

Als transparent im NIR-Wellenlängenbereich wird hier ein Glas bezeichnet, das bei einer Probendicke von 10 mm mindestens 50 % der auftreffenden NIR-Strahlungsleistung transmittiert.

### Ausführungsbeispiel

Nachfolgend wird die Erfindung anhand eines Ausführungsbeispiels und einer Zeichnung näher beschrieben. Im Einzelnen zeigt in schematischer Darstellung
- **Figur 1**: ein Zonenschmelzverfahren unter Einsatz eines Wärmestrahlungsdissipators, und
- **Figur 2**: eine vergrößerte Darstellung des rohrförmigen Wärmestrahlungsdissipators in einer Ansicht auf seine Stirnseite.

### Bereitstellen eines zylinderförmigen Rohlings aus dotiertem Quarzglas

### Beispiel 1: Herstellung mittels Gasdrucksintern

Ein zylinderförmiger Pressling aus SiO₂-Granulat wird in einem Gasdrucksinterprozess zu einem Bauteil aus dem dotierten, transparenten Quarzglas erschmolzen. Der Gasdrucksinterprozess wird in einem Gasdrucksinterofen mit einer evakuierbaren Sinterform aus Grafit mit zylinderförmigem Innenraum durchgeführt. Die Form wird zunächst unter Aufrechterhaltung eines Unterdrucks auf die Sintertemperatur von 1700 °C aufgeheizt. Nach Erreichen der Sintertemperatur wird im Ofen ein Überdruck von 15 bar eingestellt und die Form bei dieser Temperatur ca. 30 min lang gehalten. Beim anschließenden Abkühlen auf Raumtemperatur wird der Überdruck bis zu einer Temperatur von 400 °C noch weiter aufrechterhalten. Der erhaltene Rohling liegt als Quarzglasstab mit einem Durchmesser von 16 mm und einer Länge von 100 mm vor.

### Beispiel 2: Herstellung mittels Gasphasenabscheidung

Durch Außenabscheidung auf einem Trägerkörper anhand des bekannten OVD-Verfahrens wird ein Sootkörper aus Quarzglas erzeugt und dieser anschließen in einem Vakuumofen verglast. Aus dem verglasten OVD-Zylinder wird ein 1/6-Längssegment geschnitten und dieses auf einer Glasdrillbank gerundet. Es wird ein Quarzglas-Rohling mit einem Durchmesser von 80 mm und einer Länge von 2500 mm erhalten.

### Zonenschmelzverfahren

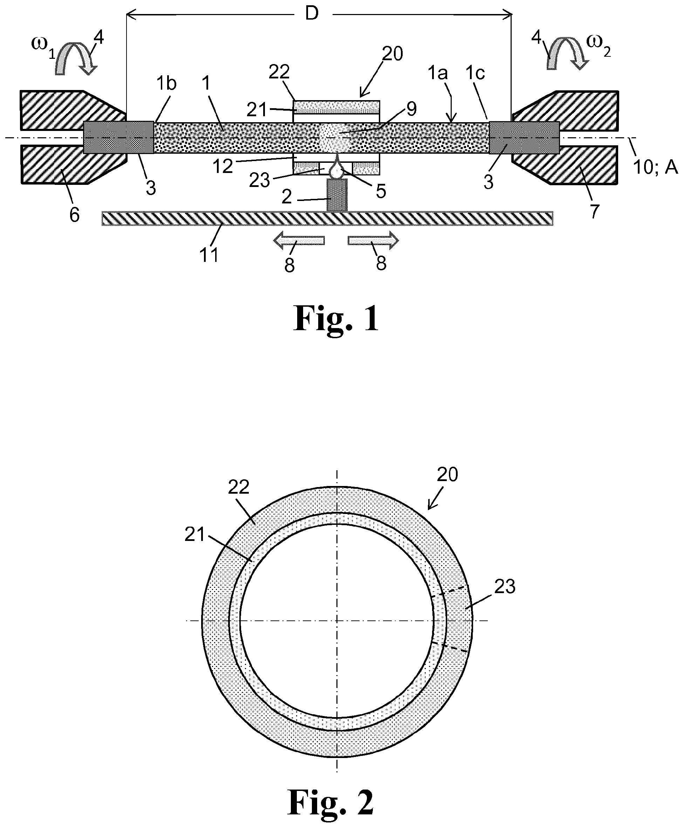

Die Rohlinge gemäß der Beispiele 1 und 2 werden anschließend einem Zonenschmelzverfahren (Drillen) unter Einsatz eines Wärmestrahlungsdissipators unterzogen. Dieser Bearbeitungsvorgang ist für den Rohling gemäß Beispiel 2 in **Figur 1** schematisch gezeigt. Hierzu werden an die stirnseitigen Enden des Rohlings 1 zwei Haltestäbe 3 mittels Plasmabrenner angeschweißt. Die Haltestäbe 3 werden in den Spindeln 6, 7 einer Glasdrehbank eingespannt. Die Spindeln 6; 7 definieren einen Arbeitsabstand "D" und eine Arbeitsachse "A" der Glasdrehbank, die mit der Rotationsachse 10 des Rohlings 1 zusammenfällt.

Die Glasdrehbank ist mit einem Sauerstoff-Wasserstoff-Heizbrenner 2 ausgestattet, der eine Knallgasflamme 5 erzeugt.

Der Heizbrenner 2 ist auf einem verfahrbaren Schlitten 11 montiert und wird auf diesem mittels eines Antriebs entlang des in der Glasdrehbank eingespannten Rohlings 1 bewegt (in der Figur durch die Richtungspfeile 8 angedeutet), wobei der Rohling 1 lokal auf über 2.000 °C erhitzt wird.

Durch ungleiche Rotationsgeschwindigkeiten (ω1 = (-40) U/min; ω2 = 120 U/min) und gegensinnige Rotationsrichtung (Richtungspfeile 4) der beiden Glasdrehbank-Spindeln 6, 7 entsteht im Heizbereich der Knallgasflamme 5 eine Scherzone 9. In der Scherzone 9 findet eine Durchmischung und somit eine Homogenisierung des Glases statt. Ihre Breite B entspricht näherungsweise der Auftrefffläche der Knallgasflamme 5 und beträgt beispielsweise 12 mm. Die Scherzone 9 wird durch reversierende Bewegung des Sauerstoff-Wasserstoffbrenners 2 entlang der Rohling-Längsachse 10 bewegt, und dabei der stabförmige Rohling 1 über seine gesamte Länge intensiv durchmischt. Auf diese Weise wird ein Glas-Zylinder mit einem Durchmesser von etwa 79 mm erhalten.

Die Scherzone 9 ist dabei von einem rohrförmigen Wärmestrahlungsdissipator 20 aus Quarzglas umgeben. Dieser hat eine Länge (Abmessung in Richtung der Rohling-Längsachse 10) von 300 mm, einen Innendurchmesser von 120 mm und eine Wanddicke von 27 mm; er ist ebenfalls auf dem Schlitten 11 montiert und wird synchron zum Heizbrenner 2 und mit Hilfe desselben Antriebs entlang des in der Glasdrehbank eingespannten Rohlings 1 bewegt. Die Wandung des Wärmestrahlungsdissipators 20 hat eine Öffnung 23, durch die hindurch der Heizbrenner 2 beziehungsweise die Knallgasflamme 5 ragen. Zwischen dem Rohling 1 und der Innenwandung des Wärmestrahlungsdissipators 20 verbleibt ein Ringspalt 12 mit einer mittleren Spaltweite von etwa 20 mm.

**Figur 2** zeigt eine größere Darstellung des Wärmestrahlungsdissipators 20 von Figur 1 in einer Ansicht auf seine Stirnseite. Die Wandung besteht aus zwei alen und aneinandergrenzenden Schichten, nämlich einer Innenschicht 21 aus synthetisch erzeugtem, blasenarmem Quarzglas mit einer Schichtdicke von 1 mm und aus einer daran unmittelbar angrenzenden Außenschicht 22 aus synthetisch erzeugtem, opakem Quarzglas mit einer Schichtdicke von 25 mm. Die glasige Innenschicht 21 enthält keine visuell erkennbaren Poren. Sie reflektiert einen Teil der auftreffenden Infrarotstrahlung (etwa 4% der Gesamtstrahlungsintensität) und ist ansonsten für Infrarotstrahlung über einen breiten Wellenlängenbereich transparent. Die Opazität der angrenzenden Außenschicht 22 wird durch eine Porosität von etwa 5% erzeugt. Die auf die Außenschicht 22 auftreffende Infrarotstrahlung wird an der Grenzfläche zur Innenschicht 21 ebenfalls teilweise reflektiert, jedoch überwiegend in der Außenschicht 22 gestreut und absorbiert. Abgesehen von einer Durchlassöffnung 23 für den Heizbrenner 2 ist die Wandung geschlossen. Die Stirnseiten sind offen.

Beim erfindungsgemäßen Zonenschmelzverfahren absorbiert der Wärmestrahlungsdissipator 20 einen Teil der Wärmeenergie aus der Scherzone 9 insbesondere durch Wärmestrahlung und Wärmeleitung, erwärmt sich dadurch selbst und emittiert diese Energie als längerwelligere Infrarotstrahlung. Der Wärmestrahlungsdissipator 20 ist mittig zur Scherzone 9 angeordnet und überragt sie beidseitig, so dass die emittierte Wärmeenergie auch auf das der Scherzone 9 benachbarte Glasvolumen übertragen wird. Im Vergleich zu einem Zonenschmelzverfahren ohne den Wärmestrahlungsdissipator 20 wird durch die Vorab- und Nacherwärmung die Temperaturdifferenz ΔTr zwischen Rohlingmitte und -peripherie verringert. Dazu trägt bei, dass die durch die mittige Durchlassöffnung 23 in den Spalt 12 zwischen Wärmestrahlungsdissipator 20 und Rohling 1 eingeleiteten Brennergase beidseitig der Scherzone 9 nach rechts und links entlang der Rohling-Längsachse 10 abfließen und dadurch die Bereiche neben der Scherzone 9 erwärmen.

Dadurch ergibt sich eine Vergleichmäßigung des Temperaturverlaufs innerhalb der Scherzone 9, die nicht nur die die Bildung einer effektiv durchmischenden Scherzone 9 erleichtert, sondern auch die Gefahr einer Rissbildung durch mechanische Spannungen infolge eines zu schnellen Abkühlens verringert. Die sich ausbildende Scherzone 9 hat eine Breite von etwa 12 mm, also etwa 13% des Rohling-Außendurchmessers. Das ist eine vergleichsweise geringe Breite. Eine schmalere Scherzone bewirkt eine intensivere Durchmischung des Glasvolumens als eine vergleichsweise breitere Scherzone.

Die zweifache Reflexion an der Schichtenfolge aus Innenschicht 21 und Außenschicht 22 bewirkt, dass der nicht reflektierte Strahlungsanteil erst in der Infrarotstrahlung absorbierenden Außenschicht 22 absorbiert wird und dort Wärme erzeugt, wohingegen die heiße Gas-Atmosphäre um die Scherzone 9 nur auf die Rohr-Innenwandung des Wärmestrahlungsdissipators 20 durch Wärmeleitung einwirkt. Der Wärmeeintrag in den Wärmestrahlungsdissipator 20 durch Strahlung findet daher im Wesentlichen in der Außenschicht 22 und damit an einer anderen Stelle statt als der Wärmeeintrag durch Wärmeleitung. Dadurch bleibt einerseits die Innenseite heiß genug, um SiO₂-Deposits auf der Innenseite zu binden und zu verglasen, so dass sie nicht herabfallen, und andererseits wird eine Überhitzung der Innenseite vermieden.

Die folgende Tabelle zeigt Versuchsparameter und Ergebnisse von Zonenschmelzverfahren mit Wärmestrahlungsdissipator (Versuch 1) und ohne Wärmestrahlungsdissipator (Versuch 2).

**Tabelle 1**

| **Versuch** | **ω₁** [U/min] | **ω₂** [U/min] | **Tₘₐₓ** [°C] | **v** [mm/min] | **B** [mm] | **Risse** |
|---|---|---|---|---|---|---|
| 1 | -40 | 160 | 2290 | 10 | 10 | Nein |
| 2 | -40 | 160 | 2235 | 7 | 12 | Ja |

Dabei bedeuten:
- ω₁, ω_{2:}: Rotationsgeschwindigkeiten beiderseits der "Scherzone".
- Tₘₐₓ: Maximale Temperatur im Bereich der Scherzone
- v: Translationsgeschwindigkeit von Heizbrenner und Wärmestrahlungsdissipator
- B: Breite der Scherzone
- Risse: Auftreten eines Risses nach Abschluss des Zonenschmelzverfahrens.

## Patentansprüche

1. Verfahren zur Homogenisierung von Glas, umfassend die Verfahrensschritte:
(a) Bereitstellen eines zylinderförmigen Rohlings (1) aus dem Glas mit einer Zylindermantelfläche (1a), die sich entlang einer Rohling-Längsachse (10) über eine Rohling-Länge zwischen einem ersten stirnseitigen Ende (1b) und einem zweiten stirnseitigen Ende (1c) erstreckt,
(b) Ausbilden einer Scherzone (9) in dem Rohling (1), indem ein Längenabschnitt des Rohlings (1) erweicht und einer thermisch-mechanischen Durchmischungsbehandlung unterzogen wird.
(c) Bewegen der Scherzone (9) entlang der Rohling-Längsachse (10),
**dadurch gekennzeichnet, dass** ein die Scherzone (9) mindestens teilweise umgebender Wärmestrahlungsdissipator (20) eingesetzt wird, dessen seitliche Abmessung in Richtung der Rohling-Längsachse (10) größer als die Scherzone (9) und kleiner als die Rohling-Länge ist, wobei der Wärmestrahlungsdissipator (20) gleichlaufend mit der Scherzone (9) entlang der Rohling-Längsachse (10) bewegt wird, und dass der Wärmestrahlungsdissipator (20) mit einer der Scherzone (9) zugewandten Glasschicht (21) aus einem für Infrarotstrahlung aus dem NIR-Wellenlängenbereich von 780 nm und 3000 nm transparenten Quarzglas, das bei einer Probendicke von 10 mm mindestens 50 % der auftreffenden NIR-Strahlungsleistung transmittiert, gebildet wird.

2. Verfahren nach Anspruch 1, **dadurch gekennzeichnet, dass** zwischen dem Wärmestrahlungsdissipator (20) und der Zylindermantelfläche (1a) des Rohlings (1) ein freier Abstand (12) im Bereich von 15 % bis 80 % eines Rohling-Durchmessers eingestellt wird.

3. Verfahren nach einem der vorhergehenden Ansprüche, **dadurch gekennzeichnet, dass** der Wärmestrahlungsdissipator eine Schicht (22) aus opakem Quarzglas aufweist.

4. Verfahren nach Anspruch 3, **dadurch gekennzeichnet, dass** die Schicht (22) aus opakem Quarzglas an die Glasschicht (21) angrenzt oder in die Glasschicht (21) übergeht.

5. Verfahren nach Anspruch 3 oder 4, **dadurch gekennzeichnet, dass** die Opazität der Schicht (22) aus opakem Quarzglas durch eine Porosität des Quarzglases im Bereich von 2 bis 8% bewirkt wird.

6. Vorrichtung zur Homogenisierung eines zylinderförmigen Rohlings (1) aus Glas, der eine Zylindermantelfläche (1a) aufweist, die sich entlang einer Rohling-Längsachse (10) über eine Rohling-Länge zwischen einem ersten stirnseitigen Ende (1b) und einem zweiten stirnseitigen Ende (1c) erstreckt, umfassend:
(a) eine Halte- und Rotationseinrichtung mit einem ersten Halteelement (6) zur Lagerung und Rotation des ersten stirnseitigen Rohling-Endes (1b) mit einer ersten Rotationsgeschwindigkeit und einem zweiten Halteelement (7) zur Lagerung und Rotation des zweiten stirnseitigen Rohling-Endes (1c) mit einer zweiten Rotationsgeschwindigkeit, wobei das erste (6) und zweite Haltelement (7) einen Arbeitsabstand (D) und eine Arbeitsachse (A) der Halte- und Rotationseinrichtung definieren, und wobei die erste und zweite Rotationsgeschwindigkeit ungleich sein können,
(b) eine Heizeinrichtung (2; 5) zum Erweichen eines Längenabschnitts des Rohlings (1), und
(c) einer Verschiebeeinrichtung (11) zur Erzeugung einer Relativbewegung zwischen Heizeinrichtung (2; 5) und Rohling (1) entlang der Arbeitsachse (A),
**dadurch gekennzeichnet, dass** die Heizeinrichtung (2; 5) eine Heizquelle (2; 5) und einen Wärmestrahlungsdissipator (20) umfasst, wobei der Wärmestrahlungsdissipator (20) eine seitliche Abmessung in Richtung der Arbeitsachse (A) aufweist, die kleiner ist als der Arbeitsabstand (D) und größer als eine im Rohling ausgebildete Scherzone (9), wobei der Wärmestrahlungsdissipator (20) eine der Scherzone (9) zugewandte, reflektierende Glasschicht (21) aufweist, die aus einem für Infrarotstrahlung aus dem NIR-Wellenlängenbereich von 780 nm und 3000 nm transparenten Quarzglas, das bei einer Probendicke von 10 mm mindestens 50 % der auftreffenden NIR-Strahlungsleistung transmittiert, gebildet wird.

7. Vorrichtung nach Anspruch 6, **dadurch gekennzeichnet, dass** der Wärmestrahlungsdissipator (20) auf den Durchmesser des zu bearbeitenden Rohlings (1) so angepasst ist, dass sich zwischen der Zylindermantelfläche (1a) des Wärmestrahlungsdissipators (20) und dem Rohling (1) ein freier Abstand im Bereich von 15 % bis 80 % des Rohling-Durchmessers ergibt.

8. Vorrichtung nach einem der Ansprüche 6 oder 7, **dadurch gekennzeichnet, dass** der Wärmestrahlungsdissipator (20) eine Schicht (22) aus opakem Quarzglas aufweist.

9. Vorrichtung nach Anspruch 8, **dadurch gekennzeichnet, dass** die Schicht (22) aus opakem Quarzglas an die Glasschicht (21) angrenzt oder in die Glasschicht (21) übergeht.

10. Vorrichtung nach Anspruch 8 oder 9, **dadurch gekennzeichnet, dass** die Opazität der Schicht (22) aus opakem Quarzglas durch eine Porosität des Quarzglases im Bereich von 2 bis 8% bewirkt wird.

11. Vorrichtung nach einem der Ansprüche 6 bis 10, **dadurch gekennzeichnet, dass** der Wärmestrahlungsdissipator (20;) aus Quarzglas besteht, das mittels Pyrolyse oder Hydrolyse aus siliziumhaltigen Ausgangssubstanzen synthetisch erzeugt worden ist.

## Claims

1. A method for homogenizing glass, comprising the method steps of:
(a) providing a cylindrical blank (1) made of the glass and having a cylindrical outer surface (1a) extending along a longitudinal axis (10) of the blank over a length of the blank between a first end face (1b) and a second end face (1c),
(b) forming a shear zone (9) in the blank (1) by softening a longitudinal section of the blank (1) and subjecting it to a thermal-mechanical intermixing treatment,
(c) displacing the shear zone (9) along the longitudinal axis (10) of the blank,
**characterized in that** a thermal radiation dissipator (20) is used which at least partially surrounds the shear zone (9), the lateral dimension of which in the direction of the longitudinal axis (10) of the blank is greater than the shear zone (9) and smaller than the length of the blank, the thermal radiation dissipator (20) is moved synchronously with the shear zone (9) along the longitudinal axis (10) of the blank, and wherein the thermal radiation dissipator (20) is formed with a glass layer (21) which faces the shear zone (9) and which is composed of a quartz glass which is transparent to infrared radiation from the NIR wavelength range of 780 nm and 3000 nm and which, at a sample thickness of 10 mm, transmits at least 50% of the incident NIR radiation power.

2. The method according to claim 1, **characterized in that** between the thermal radiation dissipator (20) and the cylindrical outer surface (1a) of the blank (1), a clearance (12) in the range of 15% to 80% of a diameter of the blank is established.

3. The method according to any one of the preceding claims, **characterized in that** the thermal radiation dissipator comprises a layer (22) of opaque quartz glass.

4. The method according to claim 3, **characterized in that** the layer (22) of opaque quartz glass borders the glass layer (21) or merges into the glass layer (21).

5. The method according to claim 3 or 4, **characterized in that** the opacity of the layer (22) of opaque quartz glass is caused by a porosity of the quartz glass in the range of 2 to 8%.

6. A device for homogenizing a cylindrical blank (1) which is composed of glass and comprises a cylindrical outer surface (1a) extending along a longitudinal axis (10) of the blank over a length of the blank between a first end face (1b) and a second end face (1c), comprising:
(a) a holding and rotating device having a first holding element (6) for supporting and rotating the first end-face blank end (1b) at a first rotation speed and a second holding element (7) for supporting and rotating the second end-face blank end (1c) at a second rotation speed, wherein the first (6) and second holding elements (7) define a working distance (D) and a working axis (A) of the holding and rotating device, and wherein the first and second rotation speeds can be unequal,
(b) a heating device (2; 5) for softening a longitudinal section of the blank (1), and
(c) a displacement device (11) for generating a relative movement between the heating device (2; 5) and the blank (1) along the working axis (A),
**characterized in that** the heating device (2; 5) comprises a heat source (2; 5) and a thermal radiation dissipator (20), wherein the thermal radiation dissipator (20) comprises a lateral dimension in the direction of the working axis (A) that is smaller than the working distance (D) and greater than a shear zone (9) formed in the blank, wherein the thermal radiation dissipator (20) comprises a reflective glass layer (21) which faces the shear zone (9) and which is composed of a quartz glass which is transparent to infrared radiation from the NIR wavelength range of 780 nm and 3000 nm, and which, at a sample thickness of 10 mm, transmits at least 50% of the incident NIR radiation power.

7. The device according to claim 6, **characterized in that** the thermal radiation dissipator (20) is adapted to the diameter of the blank (1) to be machined in such a way that between the cylindrical outer surface (1a) of the thermal radiation dissipator (20) and the blank (1), there is a clearance in the range of 15% to 80% of the diameter of the blank.

8. The device according to any one of claims 6 or 7, **characterized in that** the thermal radiation dissipator (20) comprises a layer (22) of opaque quartz glass.

9. The device according to claim 8, **characterized in that** the layer (22) of opaque quartz glass borders the glass layer (21) or merges into the glass layer (21).

10. The device according to claim 8 or 9, **characterized in that** the opacity of the layer (22) of opaque quartz glass is caused by a porosity of the quartz glass in the range of 2 to 8%.

11. The device according to any one of claims 6 to 10, **characterized in that** the thermal radiation dissipator (20;) consists of quartz glass which has been produced synthetically by means of pyrolysis or hydrolysis from silicon-containing starting substances.

## Revendications

1. Procédé d'homogénéisation du verre, comprenant les étapes de procédé de :
(a) fourniture d'une ébauche (1) en forme de cylindre constituée du verre comportant une surface latérale de cylindre (1a) qui s'étend le long d'un axe longitudinal d'ébauche (10) sur une longueur d'ébauche entre une première extrémité côté frontal (1b) et une seconde extrémité côté frontal (1c),
(b) formation d'une zone de cisaillement (9) dans l'ébauche (1) en ramollissant une section longitudinale de l'ébauche (1) et en la soumettant à un traitement de mélange thermomécanique,
(c) déplacement de la zone de cisaillement (9) le long de l'axe longitudinal d'ébauche (10),
**caractérisé en ce qu'**un dissipateur de rayonnement thermique (20) entourant au moins partiellement la zone de cisaillement (9) est utilisé, dont la dimension latérale en direction de l'axe longitudinal d'ébauche (10) est supérieure à la zone de cisaillement (9) et inférieure à la longueur d'ébauche, le dissipateur de rayonnement thermique (20) étant déplacé en même temps que la zone de cisaillement (9) le long de l'axe longitudinal d'ébauche (10), et **en ce que** le dissipateur de rayonnement thermique (20) est formé avec une couche de verre (21) faisant face à la zone de cisaillement (9) et constituée d'un verre de quartz transparent pour le rayonnement infrarouge dans la plage de longueurs d'onde NIR de 780 nm et 3 000 nm, lequel verre de quartz transparent est formé pour transmettre au moins 50 % de la puissance de rayonnement NIR incidente à une épaisseur d'échantillon de 10 mm.

2. Procédé selon la revendication 1, **caractérisé en ce qu'**une distance libre (12) entre le dissipateur de rayonnement thermique (20) et la surface latérale de cylindre (1a) de l'ébauche (1) est réglée dans la plage de 15 % à 80 % d'un diamètre d'ébauche.

3. Procédé selon l'une des revendications précédentes, **caractérisé en ce que** le dissipateur de rayonnement thermique présente une couche (22) constituée de verre de quartz opaque.

4. Procédé selon la revendication 3, **caractérisé en ce que** la couche (22) constituée de verre de quartz opaque est adjacente à la couche de verre (21) ou se confond dans la couche de verre (21).

5. Procédé selon la revendication 3 ou 4, **caractérisé en ce que** l'opacité de la couche (22) constituée de verre de quartz opaque résulte d'une porosité du verre de quartz dans la plage de 2 à 8 %.

6. Dispositif d'homogénéisation d'une ébauche (1) en forme de cylindre constituée de verre, laquelle présente une surface latérale de cylindre (1a) s'étendant le long d'un axe longitudinal d'ébauche (10) sur une longueur d'ébauche entre une première extrémité côté frontal (1b) et une seconde extrémité côté frontal (1c), comprenant :
(a) un appareil de maintien et de rotation comportant un premier élément de maintien (6) pour le montage et la rotation de la première extrémité d'ébauche côté frontal (1b) à une première vitesse de rotation et un second élément de maintien (7) pour le montage et la rotation de la seconde extrémité d'ébauche côté frontal (1c) à une seconde vitesse de rotation, les premier (6) et second (7) éléments de maintien définissant une distance de travail (D) et un axe de travail (A) de l'appareil de maintien et de rotation, et les première et seconde vitesses de rotation pouvant être différentes,
(b) un appareil de chauffage (2 ; 5) permettant de ramollir une section longitudinale de l'ébauche (1), et
(c) un appareil de déplacement (11) permettant de produire un mouvement relatif entre l'appareil de chauffage (2 ; 5) et l'ébauche (1) le long de l'axe de travail (A),
**caractérisé en ce que** l'appareil de chauffage (2 ; 5) comprend une source de chaleur (2 ; 5) et un dissipateur de rayonnement thermique (20), le dissipateur de rayonnement thermique (20) présentant une dimension latérale en direction de l'axe de travail (A) qui est inférieure à la distance de travail (D) et supérieure à une zone de cisaillement (9) formée dans l'ébauche, le dissipateur de rayonnement thermique (20) présentant une couche de verre (21) réfléchissante faisant face à la zone de cisaillement (9) et constituée d'un verre de quartz transparent pour le rayonnement infrarouge dans la plage de longueurs d'onde NIR de 780 nm et 3 000 nm, lequel verre de quartz transparent est formé pour transmettre au moins 50 % de la puissance de rayonnement NIR incidente à une épaisseur d'échantillon de 10 mm.

7. Dispositif selon la revendication 6, **caractérisé en ce que** le dissipateur de rayonnement thermique (20) est adapté au diamètre de l'ébauche (1) à usiner de sorte qu'une distance libre dans la plage de 15 % à 80 % du diamètre d'ébauche est obtenue entre la surface latérale de cylindre (1a) du dissipateur de rayonnement thermique (20) et l'ébauche (1).

8. Dispositif selon l'une des revendications 6 ou 7, **caractérisé en ce que** le dissipateur de rayonnement thermique (20) présente une couche (22) constituée de verre de quartz opaque.

9. Dispositif selon la revendication 8, **caractérisé en ce que** la couche (22) constituée de verre de quartz opaque est adjacente à la couche de verre (21) ou se confond dans la couche de verre (21).

10. Dispositif selon la revendication 8 ou 9, **caractérisé en ce que** l'opacité de la couche (22) constituée de verre de quartz opaque résulte d'une porosité du verre de quartz dans la plage de 2 à 8 %.

11. Dispositif selon l'une des revendications 6 à 10, **caractérisé en ce que** le dissipateur de rayonnement thermique (20) est constitué de verre de quartz produit synthétiquement par pyrolyse ou hydrolyse à partir de substances de départ contenant du silicium.
